# EUROPEAN PATENT SPECIFICATION

(11) **EP 4 548 324 B1**
(45) Date of publication and mention of the grant of the patent: **28.10.2026**
(21) Application number: 23736483.1
(22) Date of filing: 30.05.2023
(51) Int. Cl.: G08B 13/06, G08B 21/16, G08B 13/12, G08B 13/14

(54) **SYSTEM AND METHOD FOR PREVENTING THE PREPARATION OF IMPROVISED EXPLOSIVE MATERIALS AND DEVICES**
SYSTEM UND VERFAHREN ZUR VERHINDERUNG DER HERSTELLUNG VON UNPROVISIERTEN EXPLOSIVSTOFFEN UND VORRICHTUNGEN
SYSTÈME ET PROCÉDÉ DESTINÉS À EMPÊCHER LA PRÉPARATION DE MATÉRIAUX ET DISPOSITIFS EXPLOSIFS AMÉLIORÉS

(30) Priority: 31.05.2022 IL 29349022
(43) Date of publication of application: 07.05.2025
(73) Proprietor: Keinan, Ehud, 3657600 Timrat (IL)
(72) Inventor: Keinan, Ehud, 3657600 Timrat (IL)
(74) Representative: Pearl Cohen EU
(86) International application number: PCT/IL2023/050553
(87) International publication number: WO 2023/233402

(56) References cited:
- EP-B1- 2 798 585
- US-A1- 2018 365 636
- US-B2- 7 038 585

## Description

### TECHNICAL FIELD

The present disclosure relates to the field of terrorism prevention, and in particular to a system and method for preventing the preparation of improvised explosive materials and devices from commercially available raw materials.

### BACKGROUND

Improvised explosive devices (IEDs) are a type of unconventional explosive weapon that can be deployed in a variety of ways, and can cause loss of life, injury, and property damage in both military and civilian environments. Terrorists, violent extremists, and criminals often choose IEDs because the ingredients, components, and instructions required to make IEDs are highly accessible. In many cases, precursor chemicals enable this criminal use of IEDs because they are used in the manufacture of homemade explosives (HMEs), which are often used as a component of IEDs.

Many precursor chemicals are frequently used in industrial manufacturing and may be available as commercial products for personal use. Guides for making HMEs and instructions for constructing IEDs are widely available and can be easily found on the internet. One of the more common explosives used for constructing HMEs is triacetone triperoxide (TATP). TATP is synthesized from the commonly used chemical acetone (C₃H₆O) and hydrogen peroxide (H₂O₂).

It is commonly accepted that explosive materials, like fuels, are highly energetic compounds that, upon initiation, release their energy content in a fast, exothermic reaction. Accordingly, excessive heat of formation has been considered to be the key property of all explosives. Although this statement is probably correct for most known explosives, particularly those containing nitro groups, including nitroaromatics, nitrate esters, and nit- ramines, it may not be necessarily the case for less studied families of either conventional or improvised explosives.

Of particular interest in this regard is the group of peroxide- based explosives, including TATP, diacetone diperoxide (DADP), and hexamethylene triperoxide diamine (HMTD) and their analogues. TATP is one of the most sensitive explosives known, a property that allows its employment as both primary explosive and main charge. With power close to that of TNT it may be employed for explosive devices. However, due to its low chemical stability and its sensitivity to mechanical stress and open flame, as well as its high volatility, TATP has not been extensively used.

Unlike most conventional explosive devices, those made of TATP contain neither nitro groups nor metallic elements, making its detection by standard methods quite difficult. Furthermore, TATP, which has a quite unsuspicious appearance, reminiscent of white sugar, has no significant UV-vis or fluorescence spectra. Its detection has therefore been limited to IR/Raman spectroscopy and mass spectrometry coupled with chromatographic methods.

Based on a computational study of the thermal decomposition pathways of TATP, that the explosion of this compound is not a thermochemically highly favored event. It rather involves entropy burst, which is the result of the formation of four gaseous compounds from one molecule of TATP in the solid state. Thus, the three isopropylidene units and the six oxygen atoms in the molecule do not play the roles of fuel and oxidant, respectively. Contrary to what is expected, the isopropylidene units play merely the role of a molecular scaffold that holds the three peroxide units in close spatial proximity and appropriate orientation for a chain reaction. This structural organization of TATP allows for an efficient cascade of mechanistic events, initiated by the homolytic cleavage of one peroxide bond with consecutive cleavage of the adjacent C-O and O-O bonds in the same molecule, followed by initiation of neighboring molecules in the condensed phase.

These theoretical predictions were corroborated by time-resolved monitoring of deflagration or detonation of TATP using a fast video camera following initiation by a short pulse focused laser beam. While a fireball always accompanies the explosion of TATP under air, the formation of a fireball is totally prevented under a nitrogen atmosphere. These observations indicate that combustion of the gaseous primary products occurs as a secondary event only in the presence of exogenous oxygen. The composition of the product mixture was found to depend on the experimental conditions. With long pulse focused laser beam (150 µs at 1064 nm) at either 210 or 110 mJ, the small amounts of charcoal needed for initiation suggest that the energy required to initiate 1 by pulse laser is 4-10 mJ, much smaller than the energy required for initiation by either mechanical stress or electric discharge. This time-resolved study highlights the very unusual properties of the peroxide based explosives.

U.S. patent 7,038,585, issued May 2, 2006, is addressed to a security apparatus which provides for a cargo asset monitoring and tracking capability. The security apparatus may contain a physical locking function which provides a physical deterrent to an attached item such as a shipping drum. A microcontroller is provided within the security apparatus which monitors and coordinates locking/unlocking functions of the security apparatus, monitors an associated sensor to detect alarm conditions, monitors information from an RF transceiver with respect to proximity alerts and monitors information from one or more sensors incorporated within the security apparatus, the sensors providing information which may indicate tampering or damage to the cargo.

US patent application publication 2018/365636, published December 20, 2018, is addressed to methods, devices, and systems for tracking an asset. In particular, a device is provided that includes a processor; a wide-area network radio; and a computer-readable storage medium storing computer-readable instructions. The processor detects one or more local-area wireless communication devices within a range of communication with the computer system. The processor communicates with one or more of the one or more local-area wireless communication devices. The processor receives status information from the one or more of the one or more local-area wireless communication devices. The processor records a location of the one or more of the one or more local-area wireless communication devices. The processor transmits the location and the status information from the one or more of the one or more local-area wireless communication devices to a network location.

EP patent 2798585, granted December 18, 2012, is addressed to a sensor system comprising a tag. The tag comprises a sensor, a radio-frequency chip, and an antenna. The sensor provides an output analogous to a change in environment of the sensor. It produces an analog output and includes output terminals. The chip comprises a memory element, input terminals in communication with the sensor, and output terminals connected to the antenna. The output of the sensor alters the value of at least one bit in the memory of the chip.

### SUMMARY

Accordingly, it is a principal object of the present invention to overcome at least some of the disadvantages of prior art methods of preventing the preparation of improvised explosive materials and devices from commercially available raw materials.

This is provided in one embodiment by a system for preventing the preparation of improvised explosive materials and devices from commercially available raw materials, the system comprising: a housing comprising a securing member; a location sensor configured to sense a location of the housing, the location sensor secured to the housing; an acetone vapor sensor configured to sense the presence of acetone vapors, the acetone vapor sensor secured to the housing; an alarm unit configured to output a signal responsive to the securing member of the housing being broken; and an antenna configured to transmit data associated with: an output of the location sensor, an output of the acetone vapor sensor, and an output of the alarm unit.

In some examples, the location sensor comprises a global navigation satellite system (GNSS) receiver.

In some examples, the system further comprises a temperature sensor, the antenna configured to transmit data associated with an output of the temperature sensor.

In some examples, the system further comprises a humidity sensor, the antenna configured to transmit data associated with an output of the humidity sensor.

In some examples, the system further comprises an accelerometer, the antenna configured to transmit data associated with an output of the accelerometer.

In some examples, the system further comprises: one or more processors; and a memory, the memory having stored therein a plurality of instructions that when executed by the one or more processors cause the one or more processors to determine, responsive to the output of the accelerometer, in what type of vehicle the housing is being transported.

In some examples, the system further comprises: one or more processors; and a memory, the memory having stored therein a plurality of instructions that when executed by the one or more processors cause the one or more processors to determine, responsive to the output of the accelerometer, a condition of a road that the housing is being transported on.

In some examples, the one or more processors and the memory are each secured to the housing.

In some examples, the system further comprises a power source secured to the housing, the output of the power source controlled responsive to the output of the accelerometer.

In some examples, responsive to the output of the accelerometer being equal to zero for at least a predetermined time period, the power source is deactivated.

In some examples, the antenna is further configured to transmit an identifier associated with the housing.

In some examples, the housing covers the location sensor, the acetone vapor sensor and the alarm such that they can't be seen.

In some examples, a method for preventing the preparation of improvised explosive materials and devices from commercially available raw materials is provided, the method comprising securing the securing member of a housing to a hydrogen peroxide container, the housing having secured thereto a location sensor configured to sense a location of the housing, the location sensor secured to the housing; an acetone vapor sensor configured to sense the presence of acetone vapors, the acetone vapor sensor secured to the housing; an alarm configured to output a signal responsive to the securing member of the housing being broken; and an antenna configured to transmit data associated with: an output of the location sensor, an output of the acetone vapor sensor, and an output of the alarm.

Additional features and advantages of the invention will become apparent from the following drawings and description.

Unless otherwise defined, all technical and scientific terms used herein have the same meaning as commonly understood by one of ordinary skill in the art to which this invention pertains. In case of conflict, the patent specification, including definitions, governs. As used herein, the articles "a" and "an" mean "at least one" or "one or more" unless the context clearly dictates otherwise. As utilized herein, "and/or" means any one or more of the items in the list joined by "and/or". As an example, "x and/or y" means any element of the three-element set {(x), (y), (x, y)}. In other words, "x and/or y" means "x, y or both of x and y". As some examples, "x, y, and/or z" means any element of the seven-element set {(x), (y), (z), (x, y), (x, z), (y, z), (x, y, z)}.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

As used herein, the term "about", when referring to a measurable value such as an amount, a temporal duration, and the like, is meant to encompass variations of +/-10%, more preferably +/-5%, even more preferably +/-1%, and still more preferably +/-0.1% from the specified value, as such variations are appropriate to perform the disclosed devices and/or methods.

The following embodiments and aspects thereof are described and illustrated in conjunction with systems, tools and methods which are meant to be exemplary and illustrative, but not limiting in scope. In various embodiments, one or more of the above-described problems have been reduced or eliminated, while other embodiments are directed to other advantages or improvements.

### BRIEF DESCRIPTION OF DRAWINGS

For a better understanding of the invention and to show how the same may be carried into effect, reference will now be made, purely by way of example, to the accompanying drawings in which like numerals designate corresponding sections or elements throughout.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how several forms of the invention may be embodied in practice. In the accompanying drawings:
FIG. 1A illustrates a high-level perspective view of a first system for preventing the preparation of improvised explosive materials and devices from commercially available raw materials, secured to a container of hydrogen peroxide, in accordance with some examples;
FIGs. 1B - 1C illustrate various high-level schematic views of examples of the system of FIG. 1A;
FIG. 2 illustrates a high-level schematic view of a second system for preventing the preparation of improvised explosive materials and devices from commercially available raw materials, in accordance with some examples; and
FIG. 3 illustrates a high-level flow chart of a method for preventing the preparation of improvised explosive materials and devices from commercially available raw materials, in accordance with some examples.

### DETAILED DESCRIPTION OF CERTAIN EMBODIMENTS

In the following description, various aspects of the disclosure will be described. For the purpose of explanation, specific configurations and details are set forth in order to provide a thorough understanding of the different aspects of the disclosure. However, it will also be apparent to one skilled in the art that the disclosure may be practiced without specific details being presented herein. Furthermore, well-known features may be omitted or simplified in order not to obscure the disclosure. In the figures, like reference numerals refer to like parts throughout. In order to avoid undue clutter from having too many reference numbers and lead lines on a particular drawing, some components will be introduced via one or more drawings and not explicitly identified in every subsequent drawing that contains that component.

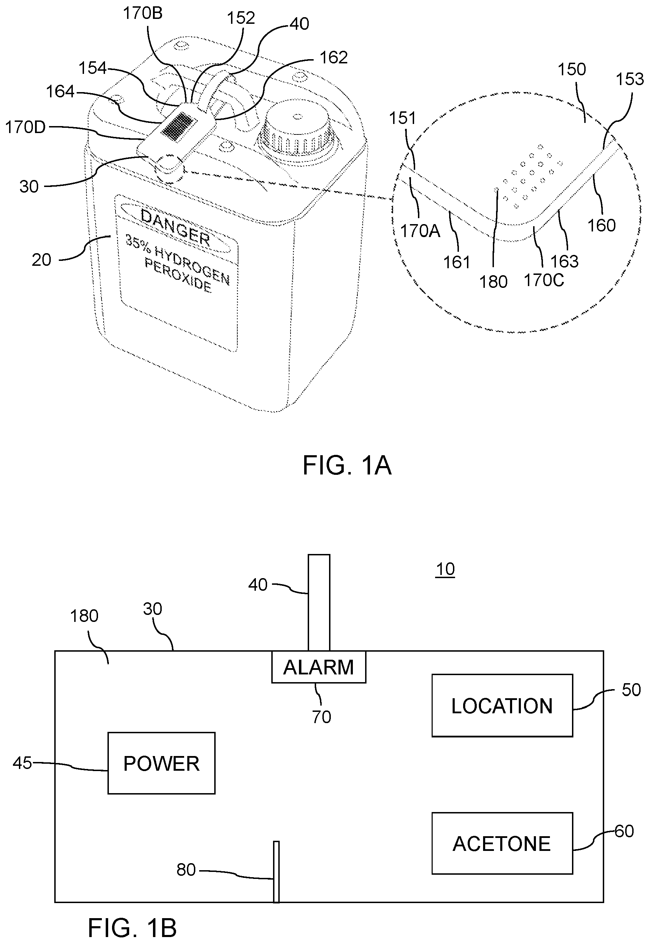

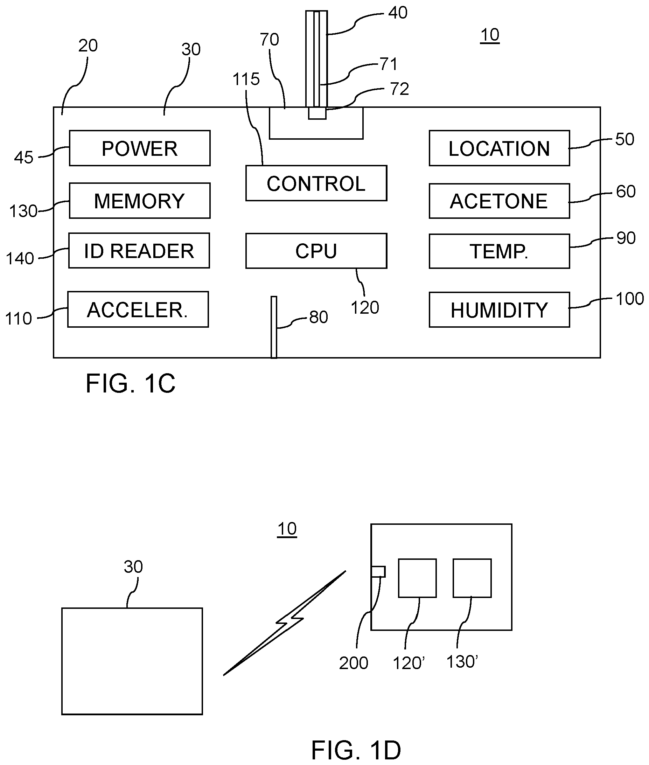

FIG. 1A illustrates a high-level perspective view of a system 10 for preventing the preparation of improvised explosive materials and devices from commercially available raw materials, secured to a container 20 of hydrogen peroxide, in accordance with some examples. FIG. 1B illustrates a high-level schematic diagram of an example of system 10 and FIG. 1C illustrates a high-level schematic diagram of a first more detailed example of system 10.

In some examples, as illustrated in FIG. 1B, system 10 comprises: a housing 30 comprising a securing member 40; a power source 45; a location sensor 50; an acetone vapor sensor 60; an alarm 70; and an antenna 80. In some examples, as illustrated in FIG. 1C, system 10 further comprises: a temperature sensor 90; a humidity sensor 100; an accelerometer 110; a control circuitry 115; one or more processors 120; a memory 130; and an identification reader 140.

In some examples, housing 30 comprises: a front wall 150 extending between a first end 151, a second end 152 opposing first end 151, a first side 153 and a second side 154 opposing first side 153; a back wall 160 extending between a first end 161, a second end 162 opposing first end 161, a first side 163 and a second side 164 opposing first side 163; and a plurality of side walls 170.

In some examples, a first side wall 170A extends: from front wall 150, at first end 151, to back wall 160, at first end 161; and from first sides 153 and 163 to second sides 154 and 164. In some examples, a second side wall 170B extends: from front wall 150, at second end 152, to back wall 160, at second end 162; and from first sides 153 and 163 to second sides 154 and 164. Thus, second side wall 170B opposes first side wall 170A.

In some examples, a third side wall 170C extends: from front wall 150, at first side 153, to back wall 160, at first side 163; and from first end 151 and 161 to second sides 152 and 162. In some examples, a fourth side wall 170D extends: from front wall 150, at second side 154, to back wall 160, at second side 164; and from first end 151 and 161 to second sides 152 and 162. Thus, fourth side wall 170D opposes third side wall 170C.

In some examples, front wall 150, back wall 160 and side walls 170A, 170B, 170C and 170D form an enclosure 180 (shown in FIG. 1B). In some examples, first side wall 170A is flush with first end 151 of front wall 150, first end 161 of back wall 160, third side wall 170C and fourth side wall 170D; second side wall 170B is flush with second end 152 of front wall 150, second end 162 of back wall 160, third side wall 170C and fourth side wall 170D; third side wall 170C is flush with first side 153 of front wall 150, first side 163 of back wall 160, first side wall 170A and second side wall 170B; and fourth side wall 170D is flush with second side 154 of front wall 150, second side 164 of back wall 160, first side wall 170A and second side wall 170B. Thus, in such an example, visibility into enclosure 180 is completely blocked by front wall 150, back wall 160 and side walls 170A, 170B, 170C and 170D.

Although housing 30 is illustrated as being generally rectangular shaped, with a triangular first end 151, this is not meant to be limiting in any way, and is only a preferred example. Particularly, housing 30 can exhibit any suitable shape, without exceeding the scope of the disclosure. Similarly, housing 30 is illustrated and described herein as comprising a front wall, a back wall and four side walls, however this is not meant to be limiting in any way and housing 30 may comprise any number of walls without exceeding the scope of the disclosure. For example, housing 30 may be shaped as a sphere, with only a single spherical shaped wall.

Housing 30 and securing member 40 are illustrated and described herein as separate elements, however this is not meant to be limiting in any way. In some examples, housing 30 and securing member 40 are the same element.

In some examples, front wall 150 exhibits one or more holes 190 extending from an outer face 155 of front wall 150 to an inner face (not shown) of front wall 150, the inner face of front wall 150 opposing outer face 155 and facing an inner face (not shown) of back wall 160. 18 holes 190 are illustrated, however this is not meant to be limiting in any way, and any number of holes 190 can be provided without exceeding the scope of the disclosure. Additionally, although holes 190 are illustrated as being present exclusively in front wall 150, this is not meant to be limiting in any way and any number of holes 190 can be present in any of front wall 150, back wall 160, first side wall 170A, second side wall 170B, third side wall 170C and fourth side wall 170D, without exceeding the scope of the disclosure. Moreover, front wall 150 may be devoid of any holes 190.

In some examples, the diameter of each hole 190 is small enough such that it can't be seen through, yet large enough such that aerosol particles can enter therethrough. In some examples, the diameter of each hole 190 is less than 10 microns.

In some examples, securing member 40 is generally ring shaped, however this is not meant to be limiting in any way. In some examples, securing member 40 exhibits any suitable shape to surround a structure, such as a handle. In some examples, securing member 40 is secured to housing 30. In some examples, front wall 150 and back wall 160 each exhibit a respective opening 195. In such an example, securing member 40 extends through openings 195 of front wall 150 and back wall 160, thereby being secured to housing 30. In another example (not shown), securing member 40 is secured to housing 30 via an adhesive material or by welding. In some examples, as described above, housing 30 and securing member 40 are embodied as a single element. In one example (not shown), securing member 40 constitutes a section of housing 30, such as an area exhibiting an opening suitable for being secured to an external device, such as a container handle. In another example (not shown), housing 30 is generally ring shaped, or other suitable shape, and thus acts as both a housing and as a securing member.

In some examples, housing 30 and/or securing member 40 are made of plastic, however this is not meant to be limiting in any way. In some examples, housing 30 is formed of a rigid material. In some examples, the thickness of housing 30, i.e. the distance between front wall 150 and back wall 160 is less than 5 millimeters.

As illustrated in FIG. 1A, in some examples, securing member 40 is secured to a handle of a hydrogen peroxide container. In some examples, housing 30 has further secured thereon identification information, such a barcode and/or other identification numbers/letters/symbols.

In some examples, each of power source 45, location sensor 50, acetone vapor sensor 60, alarm 70, antenna 80, temperature sensor 90, humidity sensor 100, accelerometer 110, control circuitry 115 and identification reader 140 are secured to housing 30, either directly or via securing member 40. In some examples, one or processors 120 and memory 130 are similarly secured to housing 30. In some examples, as illustrated in FIG. 1C, one or more processors 120 and memory 130 are external to housing 30 and are in communication with antenna 80, via an external antenna 200 such that data is provided from antenna 80 to external antenna 200, and optionally from external antenna 200 to antenna 80. Communication between antenna 80 and external antenna 200 may be direct, or via other networks. In some examples, antenna 200 is replaced with a network connection. In another example (not shown), a first processor 120 and a first memory 130 are secured to housing 30, and a second processor 120 and a second memory 130 are external to housing 30. In such an example, the second processor 120 is denoted processor 120' and the second memory 130 is denoted memory 130'.

In some examples, each of power source 45, location sensor 50, acetone vapor sensor 60, alarm 70, antenna 80, temperature sensor 90, humidity sensor 100, accelerometer 110, control circuitry 115 and identification reader 140, and optionally processor/s 120 and memory 130, are secured within enclosure 180. However, in some examples, any of power source 45, location sensor 50, acetone vapor sensor 60, alarm 70, antenna 80, temperature sensor 90, humidity sensor 100, accelerometer 110, control circuitry 115 and identification reader 140, processor/s 120 and memory 130 can be secured to housing 30 external to enclosure 180.

In some examples, power source 45 is electrically connected to location sensor 50, acetone vapor sensor 60, alarm 70, antenna 80, temperature sensor 90, humidity sensor 100, accelerometer 110, control circuitry 115 and identification reader 140. In some examples, where processor/s 120 and memory 130 are secured to housing 30, optionally within enclosure 180, processor/s 120 and/or memory 130 are electrical connected to power source 45. The term "electrically connected", as used herein, means that an electrically conductive pathway is present such that electricity can pass therebetween the two elements. Although only a single power source 45 is described an illustrated, this is not meant to be limiting in any way and any number of power sources 45 may be provided without exceeding the scope of the disclosure.

Location sensor 50 is configured to locate the global location thereof, i.e. the location of housing 30. In some examples, location sensor 50 comprises a global navigation satellite system (GNSS) receiver, as known to those skilled in the art. In some examples, the GNSS receiver is implemented as a global positioning system (GPS) receiver. In some examples, location sensor 50 comprises a dedicated antenna. In some examples, alternatively or additionally, location sensor 50 utilizes antenna 80 for determining the location.

As known to those skilled in the art, an acetone vapor sensor 60 is configured to sense the presence of vapor containing particles of acetone. In some examples, acetone vapor sensor 60 comprises, without limitation, any or a combination of: an indium nitride (InN) gas sensor; a gold (Au)-loaded zinc oxide (ZnO) based sensor; or an indium oxide (In₂O₃) based sensor.

In some examples, alarm 70 comprises an element 71 and a sensor 72. In some examples, sensor 72 is implemented as part of control circuitry 115. In some examples, at least a portion of securing member 40 is partially hollow and element 71 extends through the hollow portion of securing member 40. In some examples, element 71 additionally extends along one or more walls 150, 160 or 170.

In some examples, element 71 comprises an electrically conductive material. In such an example, sensor 72 optionally provides electric current to flow through element 71, or alternatively electric current is received directly from power source 45. In some examples, electric current is continuously provided to element 71. Alternatively, electric current is provided to element 71 at predetermined time periods. When electric current is being provided to element 71, sensor 72 detects whether current is flowing through element 71. In such an example, sensor 72 can comprise an ammeter and/or a voltmeter. Thus, if element 71 is broken, current will no longer flow therethrough.

In some examples, responsive to sensor 72 not detecting the presence of current flowing through element 71, sensor 72 outputs a signal indicating that element 71 has been broken. Such a signal thus indicates that at least a portion of housing 30 has been broken. For example, if element 71 extends through securing member 40 and securing member 40 is broken, element 71 will break as well, and the signal of sensor 72 will thus indicate that securing member 40 has been broken. If element 71 extends along one or more of the walls of housing 30, and that section of housing 30 has been broken, element 71 will break as well, and the signal of sensor 72 will thus indicate that housing 30 has been broken. In some examples, sensor 72 periodically, or continuously, transmits a signal via antenna 80 indicating that current is flowing in element 71. Thus, when element 71 breaks, sensor 72 no longer transmits the signal and it will be known that at least a portion of housing 30 (such as securing member 40) has been broken.

The above has been described in relation to an example where element 71 conducts an electrical current, however this is not meant to be limiting in any way. In some examples, element 71 allows light to be transmitted therethrough, such as a fiber optic. In such an example, sensor 72 directs light within element 71 and detects whether the light is transmitted therethrough.

In some examples, antenna 80 comprises a cellular antenna. In some examples, antenna 80 is in communication with any of location sensor 50, acetone vapor sensor 60, alarm 70, temperature sensor 90, humidity sensor 100, accelerometer 110, control circuitry 115, processor/s 120 or identification reader 140. In some examples, signals are sent to antenna 80 via control circuitry 115, and/or through a dedicated interface of processor/s 120.

Temperature sensor 90 is configured to measure the temperature in the surrounding area thereof. In some examples, temperature sensor 90 comprises any, or a combination, of: a thermocouple; a resistance temperature detector (RTD); a thermocouple; or any other suitable device that measures temperature.

Humidity sensor 100 is configured to measure the humidity in the surrounding area thereof. In some examples, humidity sensor 100 comprises a relative humidity (RH) sensor and/or an absolute humidity (AH) sensor. In some examples, humidity sensor 100 comprises a capacitive humidity sensor and/or a resistive humidity sensor.

Accelerometer 110 is configured to measure the acceleration thereof. In some examples, accelerometer 110 comprises any, or a combination, of: a piezoelectric accelerometer; a piezoresistance accelerometer; or a capacitive accelerometer. In some examples, location sensor 50 and/or processor/s 120 receives acceleration information from accelerometer 110 as part of the determination of the present location, particularly when outside signals are blocked from reaching the antenna, such as when inside a structure. Particularly, in the event that the current location can't be directly determined, the acceleration information, optionally together with information from an orientation sensor (not shown) can be used to track the estimated location thereof, as known to those skilled in the art.

In some examples, control circuitry 115 comprises a microcontroller. In one further example, the microcontroller comprises a processor 120 and memory 130. In some examples, control circuitry 115 is a separate element than processor 120 and/or memory 130. In some examples, control circuitry 115 comprises any of a dedicated group of logic gates, transistors and various electrical components. In some examples, one or more processors 120 can be implemented, without limitation, as any, or a combination, of: a microcontroller; a microprocessor, an embedded processor, a digital signal processor; or a media processor. In some examples, memory 130 comprises, without limitation, any, or a combination, of: random access memory (RAM), such as dynamic RAM (DRAM) and/or static RAM (SRAM); read-only memory (ROM), such as programmable ROM (PROM), erasable PROM (EPROM) and/or electrically erasable PROM (EEPROM); cache memory; optical drive memory; magnetic storage memory; or solid-state memory.

Identification reader 140 is configured to read an identifier (ID) from an external source. In some examples, identification reader 140 comprises any, or a combination of: a radio frequency ID (RFID) reader; a near-field communication (NFC) transceiver; or a Bluetooth^{®} receiver.

In some examples, memory 130 has stored therein a plurality of instructions such that when the instructions are read by processor/s 120 they cause processor/s 120 to perform various steps and methods. In some examples, one of these methods comprises determining, responsive to the output of accelerometer 110, in what type of vehicle housing 30 is being transported. Particularly, in some examples, processor/s 120 receives the output of accelerometer 110 and compares the output acceleration values to respective predetermined threshold values. Responsive to an outcome of these comparisons, processor/s 120 determines the type of vehicle that is transporting housing 30. For example, a truck would exhibit smaller acceleration values than a car, which would exhibit smaller acceleration values than a motorcycle. Transporting an industrial sized container of hydrogen peroxide on a motorcycle, or in a car, would be suspicious.

In some examples, memory 130 has stored therein a predetermined model of acceleration values for different vehicle types. In such an example, processor/s 120 compares the output acceleration values to the model to determine the vehicle type. In some examples, memory 130 has stored therein a predetermined model of speed values for different vehicle types. In such examples, processor/s 120 determines speed values from the output of accelerometer 110 and/or location sensor 50, and compares the determined speed values to the model to determine the vehicle type. In some examples, the speed values are used in conjunction with the acceleration values and compared to a predetermined model of acceleration and speed values. In some examples, the predetermined acceleration model, speed model and/or combined model comprises a classifier model. In some examples, the predetermined acceleration model, speed model and/or combined model is generated by a random forest method. In some examples, the predetermined acceleration model, speed model and/or combined model comprises a convolutional neural network. In some examples, the predetermined acceleration model, speed model and/or combined model is classified, and/or trained, based on inputs using: relevant acceleration and/or speed values; and vehicle types and/or vehicle parts associated with certain vehicle types, such as engine and/or brake types.

In some examples, as will be described below, the vehicle type is determined by a remote processor.

In some examples, a method comprises determining, responsive to the output of accelerometer 110, the condition of the road that housing 30 is currently being transported on. Particularly, the smoother the road, the less changes there will be in acceleration. Thus, in some examples, processor/s 120 receives the output of accelerometer 110 and compares the output acceleration values to respective predetermined threshold values. Responsive to an outcome of these comparisons, processor/s 120 determines the condition of the road. In some examples, processor/s 120 determines the average frequency of changes in the acceleration values and compares the determined average frequency to a respective predetermined threshold. Responsive to an outcome of the comparison indicating that the average frequency is greater than the respective predetermined threshold, processor/s 120 determines that the condition of the road is poor, which may be suspicious. In some examples, memory 130 has stored therein a predetermined model of acceleration values for different road conditions. In such an example, processor/s 120 compares the output acceleration values to the model to determine the road condition.

In some examples, the determination of the road condition is responsive to an outcome of the determination of the vehicle type. In some examples, the determination of the vehicle type is responsive to an outcome of the determination of the road condition. In some examples, processor/s 120 compares the determined vehicle type and the determined road condition, and optionally other predetermined functions of acceleration values, to predetermined thresholds or models to determine the level of suspected risk.

In some examples, memory 130 has stored therein a predetermined model of acceleration values for different road conditions. In such an example, processor/s 120 compares the output acceleration values to the model to determine the road condition. In some examples, memory 130 has stored therein a predetermined model of speed values for different road conditions. In such examples, processor/s 120 determines speed values from the output of accelerometer 110 and/or location sensor 50, and compares the determined speed values to the model to determine the road condition. In some examples, the speed values are used in conjunction with the acceleration values and compared to a predetermined model of acceleration and speed values. In some examples, the predetermined acceleration model, speed model and/or combined model comprises a classifier model. In some examples, the predetermined acceleration model, speed model and/or combined model is generated by a random forest method. In some examples, the predetermined acceleration model, speed model and/or combined model comprises a convolutional neural network. In some examples, the predetermined acceleration model, speed model and/or combined model is classified, and/or trained, based on inputs using: relevant acceleration and/or speed values; and road conditions.

In some examples, as will be described below, the road condition is determined by a remote processor.

In some examples, the output of power source 45 is controlled responsive to the output of accelerometer 110. Particularly, in some examples, responsive to the output of accelerometer 110 indicating that the acceleration is zero for at least a predetermined time period, it is determined that housing 30 is not in transit, and the output of power source 45 is altered. In some examples, in such a state power is provided only to alarm 70 and accelerator 110. In some examples, power source 45 comprises at least a pair of power sources, a first power source being shut off when the output of accelerometer 110 is indicative that housing 30 is not in transit, while the second power source (which powers alarm 70 and accelerometer 110) is still in operation.

In some examples, control circuitry 115 outputs to antenna 80 data associated with one, or a combination of: an output of location sensor 50; an output of acetone vapor sensor 60; an output of alarm 70; an output of temperature sensor 90; an output of humidity sensor 100; and an output of accelerometer 110.

In some examples, the data associated with the output of location sensor 50 comprises the location of housing 30. In some examples, the data associated with the output of location sensor 50 comprises the signals output by location sensor 50. In some examples, control circuitry 115 and/or processor/s 120 convert the output of location sensor 50 to a predetermined coordinate system, or other mapping system, and the data associated with the output of location sensor 50 comprises the converted location values.

In some examples, the data associated with the output of acetone vapor sensor 60 comprises the detected concentration of acetone vapor. In some examples, the data associated with the output of acetone vapor sensor 60 comprises the signals output by acetone vapor sensor 60. In some examples, control circuitry 115 and/or processor/s 120 converts the signals output by vapor sensor 60 to a predetermined acetone vapor value reference, and the data associated with the output of acetone vapor sensor 60 comprises the converted acetone vapor values. In some examples, the data comprises average values of acetone vapor concentration over a predetermined time period.

In some examples, control circuitry 115 and/or processor/s 120 compares the output of acetone vapor sensor 60 to a respective predetermined threshold value. In such an example, the data associated with the output of acetone vapor sensor 60 comprises an indication that the concentration of acetone vapor has exceeded the respective predetermined threshold value.

In some examples, the data associated with the output of alarm 70 comprises the detection of element 71 being broken, as described above. In some examples, the data associated with the output of alarm 70 comprises the signal output by alarm 70. In some examples, responsive to the output of alarm 70, control circuitry 115 and/or processor/s 120 generates a signal indicating that element 71 has been broken.

In some examples, the data associated with the output of temperature sensor 90 comprises the detected temperature. In some examples, the data associated with the output of temperature sensor 90 comprises the signals output by temperature sensor 90. In some examples, control circuitry 115 and/or processor/s 120 converts the signals output by temperature sensor 90 to a predetermined temperature value reference, and the data associated with the output of temperature sensor 90 comprises the converted temperature values.

In some examples, the data associated with the output of humidity sensor 100 comprises the detected humidity level. In some examples, the data associated with the output of humidity sensor 100 comprises the signals output by humidity sensor 100. In some examples, control circuitry 115 and/or processor/s 120 converts the signals output by humidity sensor 100 to a predetermined humidity value reference, and the data associated with the output of humidity sensor 100 comprises the converted humidity values.

In some examples, control circuitry 115 and/or processor/s 120 determine a predetermined function of the output of temperature sensor 90 and humidity sensor 100, and the data associated with the outputs of temperature sensor 90 and humidity sensor 100 comprises the determined function thereof.

In some examples, the data associated with the output of accelerometer 110 comprises the detected acceleration values. In some examples, the data associated with the output of accelerometer 110 comprises the signals output by accelerometer 110. In some examples, control circuitry 115 and/or processor/s 120 converts the signals output by accelerometer 110 to a predetermined acceleration value reference, and the data associated with the output of accelerometer 110 comprises the converted acceleration values.

In some examples, the data associated with the output of accelerometer 110 comprises the determined vehicle type and/or the determined road condition, as described above. In some examples, the data associated with the output of accelerometer 110 comprises the determined level of risk, determined responsive to the determined vehicle type and road condition, as described above.

In some examples, control circuitry 115 and/or processor/s 120 compares the outputs of one or more of location sensor 50, acetone vapor sensor 60, temperature sensor 90, humidity sensor 100 or accelerometer 110 to respective predetermined threshold values and/or predetermined models, and determines the security risk level responsive to an outcome of the comparisons. In some examples, the output data associated with the output of location sensor 50, acetone vapor sensor 60, temperature sensor 90, humidity sensor 100 and/or accelerometer 110 comprises the determined security risk level.

In some examples, identification reader 140 reads an ID from an external source, as described above. In such an example, antenna 80 further outputs the ID, which is thus an identifier associated with housing 30.

As described above, in one example antenna 80 is in communication with antenna 200, optionally via a network, such as a cellular network. In some examples, the data output by antenna 80 is received by antenna 200 and analyzed by processor 120' associated with antenna 200. In some examples, the methods described above for determining vehicle size and/or road condition are performed by processor 120'. In some examples, processor 120' compares the received data from antenna 80 to various threshold values and/or predetermined models to determine the risk of the respective container 20 of hydrogen peroxide being in the hands of a hostile entity. In some examples, processor 120' outputs a message to local authorities with an indication of the determined risk and the location information associated with housing 30.

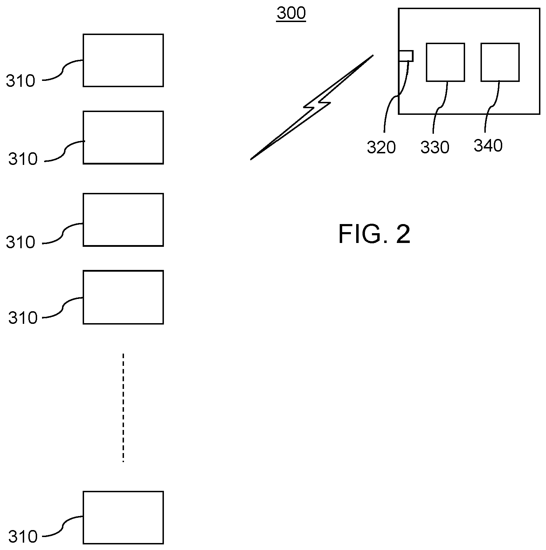

FIG. 2 illustrates a block diagram of an arrangement 300 for preventing the preparation of improvised explosive materials and devices from commercially available raw materials, in accordance with some examples. In some examples, arrangement 300 comprises: a plurality of detection units 310; a network connection 320; one or more processors 330; and a memory 340. In some examples, each detection unit 310 is in all respects similar to system 10 described above. In some examples, each detection unit 310 is in all respects similar to system 10, with the exception of certain elements that aren't provided. In some examples, network connection 320 comprises a connection to the internet, or other predetermined network, such as a cellular network.

In some examples, one or more processors 330 can be implemented, without limitation, as any, or a combination, of: a microcontroller; a microprocessor, an embedded processor, a digital signal processor; or a media processor. In some examples, processor/s 330 comprises a convolutional neural network (CNN) and/or other suitable machine learning systems.

In some examples, memory 340 comprises, without limitation, any, or a combination, of: RAM, such as DRAM and/or SRAM; ROM, such as PROM, EPROM and/or EEPROM; cache memory; optical drive memory; magnetic storage memory; or solid-state memory.

In some examples, memory 340 has stored therein a plurality of instructions which when read by processor/s 330 cause processor/s 330 to perform various methods. In some examples, each detection unit 310 is secured to a respective container of hydrogen peroxide (not shown) and processor/s 330 receive data therefrom via network connection 320. In some examples, the data comprises any, or a combination, of : outputs of respective location sensors 50; outputs of respective acetone vapor sensors 60; outputs of respective temperature sensors 90; outputs of respective humidity sensors 100; and outputs of respective accelerometers 110.

In some examples, the methods described above in relation to identifying a vehicle type and/or identifying a road condition are performed by processor/s 330. Particularly, processor/s 330 receive acceleration, speed and/or location data from detection unit 310, and determined the vehicle type and/or road condition as described above.

In some examples, processor/s 330 analyzes the received data over a predetermined period of time and determines a model of normal parameters of these outputs. In an example where processor/s 330 comprises a CNN, the CNN is trained by the received data. In some examples, processor/s 330 thus determines a model of normal parameters for the outputs of the location sensors, acetone vapor sensors, temperature sensors, humidity sensors and/or accelerometers. This model can be stored in the respective processors 120, as described above. In some examples, upon receiving data from a detection unit 310 10 that does not meet the model of normal parameters, processor/s 330 generate an alert message. In some examples, the alert message is sent via network connection 320 to a predetermined server, and/or is output at a user display.

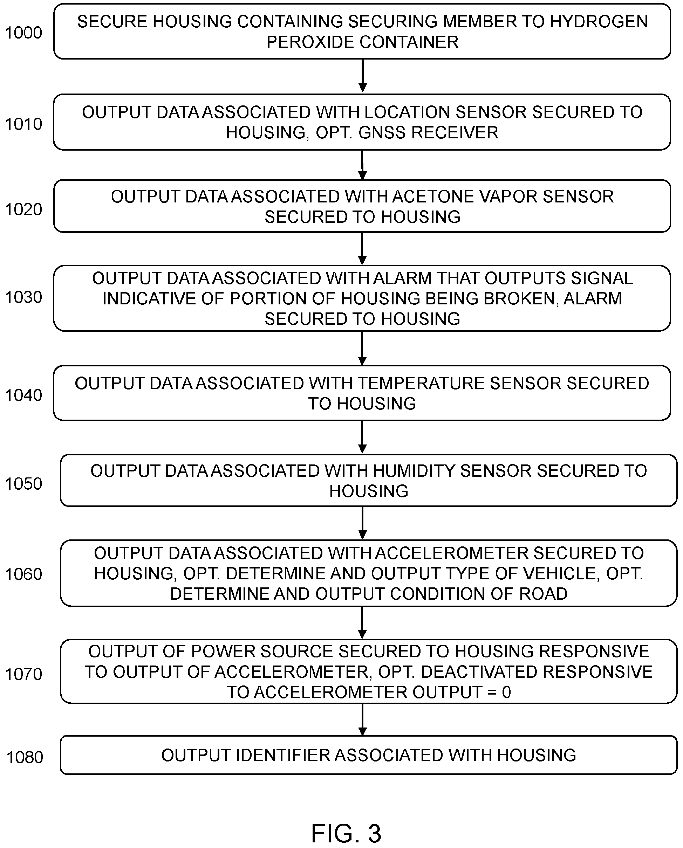

FIG. 3 illustrates a high-level flow chart of a method for preventing the preparation of improvised explosive materials and devices from commercially available raw materials, in accordance with some examples. In some examples, in stage 1000, a housing is secured to a container of hydrogen peroxide, the housing comprising a securing member.

In some examples, in stage 1010, data associated with an output of a location sensor configured to sense a location of the housing of stage 1000 is output via an antenna, the location sensor secured to the housing. In some examples, the location sensor comprises a GNSS receiver.

In some examples, in stage 1020, data associated with an output of an acetone vapor sensor configured to sense the presence of acetone vapors is output via the antenna of stage 1010, the acetone vapor sensor secured to the housing.

In some examples, in stage 1030, data associated with an output of an alarm configured to output a signal indicative of whether at least a portion of the housing has been broken is output via the antenna of stage 1010, the alarm secured to the housing of stage 1000.

In some examples, in stage 1040, data associated with a temperature sensor is output via the antenna of stage 1010, the temperature sensor secured to the housing of stage 1000. In some examples, in stage 1050, data associated with a humidity sensor is output via the antenna of stage 1010, the humidity sensor secured to the housing of stage 1000.

In some examples, in stage 1060, data associated with an accelerometer is output via the antenna of stage 1010, the accelerometer secured to the housing of stage 1000. In some examples, responsive to an output of the accelerometer, the type of vehicle the housing of stage 1000 is being transported in is determined, and information associated with the determined type of vehicle is output. In some examples, responsive to an output of the accelerometer, the condition of the road that the housing is being transported on is determined, and information associated with the determined road condition is output.

In some examples, in stage 1070, an output of a power source secured to the housing of stage 1000 is controlled responsive to an output of the accelerometer of stage 1060. In some examples, responsive to the output of the accelerometer being equal to zero for at least a predetermined time period, the power source is deactivated.

In some examples, in stage 1080, an identifier associated with the housing of stage 1000 is transmitted.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

Unless otherwise defined, all technical and scientific terms used herein have the same meanings as are commonly understood by one of ordinary skill in the art to which this invention belongs. Although methods similar or equivalent to those described herein can be used in the practice or testing of the present invention, suitable methods are described herein.

In case of conflict, the patent specification, including definitions, will prevail over all publications, patent applications, patents, and other references mentioned herein. In addition, the materials, methods, and examples are illustrative only and not intended to be limiting.

It will be appreciated by persons skilled in the art that the present invention is not limited to what has been particularly shown and described hereinabove. Rather the scope of the present invention is defined by the appended claims and includes both combinations and subcombinations of the various features described hereinabove as well as variations and modifications thereof which would occur to persons skilled in the art upon reading the foregoing description.

## Claims

1. A system (10) for preventing the preparation of improvised explosive materials and devices from commercially available raw materials, the system comprising:
a housing (30) comprising a securing member (40);
a location sensor (50) configured to sense a location of the housing, the location sensor secured to the housing;
an acetone vapor sensor (60) configured to sense the presence of acetone vapors, the acetone vapor sensor secured to the housing;
an alarm unit (70) configured to output a signal, the signal indicative of whether at least a portion of the housing has been broken; and
an antenna (80) configured to transmit data associated with:
an output of the location sensor,
an output of the acetone vapor sensor, and
an output of the alarm unit.

2. The system of claim 1, wherein the location sensor comprises a global navigation satellite system (GNSS) receiver.

3. The system of claim 1 or claim 2, further comprising a temperature sensor (90), the antenna configured to transmit data associated with an output of the temperature sensor.

4. The system of any one of claims 1 - 3, further comprising a humidity sensor (100), the antenna configured to transmit data associated with an output of the humidity sensor.

5. The system of any one of claims 1 - 4, further comprising an accelerometer (110), the antenna configured to transmit data associated with an output of the accelerometer.

6. The system of claim 5, further comprising:
one or more processors (120); and
a memory (130), the memory having stored therein a plurality of instructions that when executed by the one or more processors cause the one or more processors to determine, responsive to the output of the accelerometer, in what type of vehicle the housing is being transported, and output information associated with the determined type of vehicle.

7. The system of claim 5, further comprising:
one or more processors (120); and
a memory (130), the memory having stored therein a plurality of instructions that when executed by the one or more processors cause the one or more processors to determine, responsive to the output of the accelerometer, a condition of a road that the housing is being transported on, and output information associated with the determined condition of the road.

8. The system of claim 6 or 7, wherein the one or more processors and the memory are each secured to the housing.

9. The system of any one of claims 5 - 8, further comprising a power source (45) secured to the housing, the output of the power source controlled responsive to the output of the accelerometer.

10. The system of claim 9, wherein responsive to the output of the accelerometer being equal to zero for at least a predetermined time period, the power source is deactivated.

11. The system of any one of claims 1 - 10, wherein the antenna is further configured to transmit an identifier associated with the housing.

12. The system of any one of claims 1 - 11, wherein the housing covers the location sensor, the acetone vapor sensor and the alarm unit such that they can't be seen.

13. A method for preventing the preparation of improvised explosive materials and devices from commercially available raw materials, the method comprising securing (1000) the securing member of the housing (30) of any one of claims 1 - 12 to a hydrogen peroxide container (20).

14. An arrangement (300) for preventing the preparation of improvised explosive materials and devices from commercially available raw materials, the arrangement comprising:
a plurality of detection units (310), each comprising the system (10) of any one of claims 1 - 12;
one or more processors (330); and
a memory (340),
wherein the memory has stored therein a plurality of instructions that when read by the one or more processors cause the one or more processors to:
receive data from each of the plurality of detection units,
responsive to the received data, determine a model of normal parameters for any, or a combination, of location sensors (50), acetone vapor sensors (60), temperature sensors (90), humidity sensors (100) and/or accelerometers (110), and
output the determined model.

15. The arrangement of claim 14, wherein the one or more processors comprises a convolutional neural network (CNN),
wherein the CNN is trained by the received data and the model is determined by the trained CNN.

## Patentansprüche

1. Ein System (10) zur Verhinderung der Herstellung von improvisierten Sprengstoffen und Sprengvorrichtungen aus handelsüblichen Rohstoffen, wobei das System umfasst:
ein Gehäuse (30) mit einem Befestigungselement (40);
einen Positionssensor (50), der so konfiguriert ist, dass er eine Position des Gehäuses erfasst, wobei der Positionssensor am Gehäuse befestigt ist;
einen Acetondampfsensor (60), der so ausgelegt ist, dass er das Vorhandensein von Acetondämpfen erfasst, wobei der Acetondampfsensor am Gehäuse befestigt ist;
eine Alarmeinheit (70), die so ausgelegt ist, dass sie ein Signal ausgibt, wobei das Signal anzeigt, ob zumindest ein Teil des Gehäuses gebrochen wurde; und
eine Antenne (80), die dazu ausgelegt ist, Daten zu übertragen, die sich auf Folgendes beziehen:
ein Ausgangssignal des Positionssensors,
ein Ausgangssignal des Acetondampfsensors und
ein Ausgangssignal der Alarmeinheit.

2. System nach Anspruch 1, wobei der Positionssensor einen Empfänger für ein globales Navigationssatellitensystem (GNSS) umfasst.

3. System nach Anspruch 1 oder Anspruch 2, das ferner einen Temperatursensor (90) umfasst, wobei die Antenne so konfiguriert ist, dass sie Daten überträgt, die mit einem Ausgangssignal des Temperatursensors in Zusammenhang stehen.

4. System nach einem der Ansprüche 1 bis 3, das ferner einen Feuchtigkeitssensor (100) umfasst, wobei die Antenne so konfiguriert ist, dass sie Daten überträgt, die mit einem Ausgangssignal des Feuchtigkeitssensors in Zusammenhang stehen.

5. System nach einem der Ansprüche 1 bis 4, das ferner einen Beschleunigungssensor (110) umfasst, wobei die Antenne so konfiguriert ist, dass sie Daten überträgt, die mit einem Ausgangssignal des Beschleunigungssensors in Zusammenhang stehen.

6. System nach Anspruch 5, das ferner umfasst:
einen oder mehrere Prozessoren (120); und
einen Speicher (130), in dem eine Vielzahl von Befehlen gespeichert ist, die, wenn sie von dem einen oder den mehreren Prozessoren ausgeführt werden, bewirken, dass der eine oder die mehreren Prozessoren in Reaktion auf das Ausgangssignal des Beschleunigungssensors ermitteln, in welcher Art von Fahrzeug das Gehäuse transportiert wird, und Informationen ausgeben, die mit der ermittelten Fahrzeugart in Zusammenhang stehen.

7. System nach Anspruch 5, das ferner umfasst:
einen oder mehrere Prozessoren (120); und
einen Speicher (130), in dem eine Vielzahl von Befehlen gespeichert ist, die, wenn sie von dem einen oder den mehreren Prozessoren ausgeführt werden, bewirken, dass der eine oder die mehreren Prozessoren in Reaktion auf das Ausgangssignal des Beschleunigungssensors einen Zustand einer Straße ermitteln, auf der das Gehäuse transportiert wird, und Informationen ausgeben, die mit dem ermittelten Zustand der Straße in Zusammenhang stehen.

8. System nach Anspruch 6 oder 7, wobei der eine oder die mehreren Prozessoren und der Speicher jeweils am Gehäuse befestigt sind.

9. System nach einem der Ansprüche 5 bis 8, das ferner eine am Gehäuse befestigte Leistungsquelle (45) umfasst, wobei die Ausgangsgröße der Leistungsquelle in Abhängigkeit vom Ausgangssignal des Beschleunigungssensors gesteuert wird.

10. System nach Anspruch 9, wobei die Leistungsquelle deaktiviert wird, wenn das Ausgangssignal des Beschleunigungssensors für mindestens einen vorbestimmten Zeitraum gleich null ist.

11. System nach einem der Ansprüche 1 bis 10, wobei die Antenne ferner so konfiguriert ist, dass sie eine dem Gehäuse zugeordnete Kennung sendet.

12. Das System nach einem der Ansprüche 1 bis 11, wobei das Gehäuse den Positionssensor, den Acetondampfsensor und die Alarmeinheit so abdeckt, dass sie nicht sichtbar sind.

13. Verfahren zur Verhinderung der Herstellung von improvisierten Sprengstoffen und Sprengvorrichtungen aus handelsüblichen Rohstoffen, wobei das Verfahren das Befestigen (1000) des Befestigungselements des Gehäuses (30) gemäß einem der Ansprüche 1 bis 12 an einem Wasserstoffperoxidbehälter (20) umfasst.

14. Eine Anordnung (300) zur Verhinderung der Herstellung von improvisierten Sprengstoffen und Sprengvorrichtungen aus handelsüblichen Rohstoffen, wobei die Anordnung umfasst:
eine Vielzahl von Erfassungseinheiten (310), von denen jede das System (10) gemäß einem der Ansprüche 1 bis 12 umfasst;
einen oder mehrere Prozessoren (330); und
einen Speicher (340),
wobei in dem Speicher eine Vielzahl von Befehlen gespeichert ist, die, wenn sie von dem einen oder den mehreren Prozessoren gelesen werden, bewirken, dass der eine oder die mehreren Prozessoren:
Daten von jeder der mehreren Erfassungseinheiten empfangen,
als Reaktion auf die empfangenen Daten ein Modell normaler Parameter für beliebige Positionssensoren (50), Acetondampfsensoren (60), Temperatursensoren (90), Feuchtigkeitssensoren (100) und/oder Beschleunigungssensoren (110) oder eine Kombination davon ermitteln und
das ermittelte Modell ausgeben.

15. Anordnung nach Anspruch 14, wobei der eine oder die mehreren Prozessoren ein konvolutionelles neuronales Netzwerk (CNN) umfassen,
wobei das CNN anhand der empfangenen Daten trainiert wird und das Modell durch das trainierte CNN ermittelt wird.

## Revendications

1. Système (10) destiné à empêcher la fabrication de matières et d'engins explosifs improvisés à partir de matières premières disponibles dans le commerce, le système comprenant:
un boîtier (30) comprenant un élément de fixation (40);
un capteur de position (50) configuré pour détecter une position du boîtier, le capteur de position étant fixé au boîtier;
un capteur de vapeurs d'acétone (60) configuré pour détecter la présence de vapeurs d'acétone, le capteur de vapeurs d'acétone étant fixé au boîtier;
une unité d'alarme (70) configurée pour émettre un signal, le signal indiquant si au moins une partie du boîtier a été brisée; et
une antenne (80) configurée pour transmettre des données associées à:
une sortie du capteur de position,
une sortie du capteur de vapeurs d'acétone, et
une sortie de l'unité d'alarme.

2. Système selon la revendication 1, dans lequel le capteur de position comprend un récepteur de système mondial de navigation par satellite (GNSS).

3. Système selon la revendication 1 ou 2, comprenant en outre un capteur de température (90), l'antenne étant configurée pour transmettre des données associées à une sortie du capteur de température.

4. Système selon l'une quelconque des revendications 1 à 3, comprenant en outre un capteur d'humidité (100), l'antenne étant configurée pour transmettre des données associées à une sortie du capteur d'humidité.

5. Système selon l'une quelconque des revendications 1 à 4, comprenant en outre un accéléromètre (110), l'antenne étant configurée pour transmettre des données associées à une sortie de l'accéléromètre.

6. Système selon la revendication 5, comprenant en outre:
un ou plusieurs processeurs (120); et
une mémoire (130), dans laquelle est stockée une pluralité d'instructions qui, lorsqu'elles sont exécutées par le ou les processeurs, amènent le ou les processeurs à déterminer, en réponse à la sortie de l'accéléromètre, dans quel type de véhicule le boîtier est transporté, et à fournir des informations associées au type de véhicule déterminé.

7. Système selon la revendication 5, comprenant en outre:
un ou plusieurs processeurs (120); et
une mémoire (130), dans laquelle est stockée une pluralité d'instructions qui, lorsqu'elles sont exécutées par le ou les processeurs, amènent le ou les processeurs à déterminer, en réponse à la sortie de l'accéléromètre, un état d'une route sur laquelle le boîtier est transporté, et à fournir des informations associées à l'état de la route ainsi déterminé.

8. Système selon la revendication 6 ou 7, dans lequel le ou les processeurs et la mémoire sont chacun fixés au boîtier.

9. Système selon l'une quelconque des revendications 5 à 8, comprenant en outre une source d'alimentation (45) fixée au boîtier, la sortie de la source d'alimentation étant commandée en fonction de la sortie de l'accéléromètre.

10. Système selon la revendication 9, dans lequel, lorsque la sortie de l'accéléromètre est égale à zéro pendant au moins une durée prédéterminée, la source d'alimentation est désactivée.

11. Système selon l'une quelconque des revendications 1 à 10, dans lequel l'antenne est en outre configurée pour transmettre un identifiant associé au boîtier.

12. Système selon l'une quelconque des revendications 1 à 11, dans lequel le boîtier recouvre le capteur de position, le capteur de vapeurs d'acétone et l'unité d'alarme de manière à ce qu'ils ne soient pas visibles.

13. Procédé destiné à empêcher la fabrication de matières et d'engins explosifs improvisés à partir de matières premières disponibles dans le commerce, le procédé comprenant fixation (1000) de l'élément de fixation du boîtier (30) selon l'une quelconque des revendications 1 à 12 à un récipient de peroxyde d'hydrogène (20).

14. Agencement (300) destiné à empêcher la fabrication de matières et d'engins explosifs improvisés à partir de matières premières disponibles dans le commerce, l'agencement comprenant:
une pluralité d'unités de détection (310), chacune comprenant le système (10) de l'une quelconque des revendications 1 à 12;
un ou plusieurs processeurs (330); et
une mémoire (340),
dans lequel la mémoire contient une pluralité d'instructions stockées qui, lorsqu'elles sont lues par le ou les processeurs, amènent le ou les processeurs à:
recevoir des données provenant de chacune des unités de détection,
en réponse aux données reçues, déterminer un modèle de paramètres normaux pour l'un quelconque, ou une combinaison, des capteurs de position (50), des capteurs de vapeurs d'acétone (60), des capteurs de température (90), des capteurs d'humidité (100) et/ou des accéléromètres (110), et
fournir le modèle déterminé.

15. Agencement selon la revendication 14, dans lequel le ou les processeurs comprennent un réseau neuronal convolutif (CNN),
dans lequel le CNN est entraîné à l'aide des données reçues et le modèle est déterminé par le CNN entraîné.
